# EUROPÄISCHE PATENTSCHRIFT

(11) **EP 1 590 151 B1**
(45) Veröffentlichungstag und Bekanntmachung des Hinweises auf die Patenterteilung: **06.12.2006**
(21) Anmeldenummer: 04707523.9
(22) Anmeldetag: 03.02.2004
(51) Int. Cl.: B29C 44/08, B29C 44/14

(54) **VERFAHREN ZUR THERMISCHEN FORMGEBUNG VON VERKLEIDUNSTEILEN**
METHOD FOR THERMALLY SHAPING COVERING ELEMENTS
PROCEDE DE FAÇONNAGE THERMIQUE DE PIECES DE REVETEMENT

(30) Priorität: 07.02.2003 DE 10305065
(43) Veröffentlichungstag der Anmeldung: 02.11.2005
(73) Patentinhaber: Stankiewicz GmbH, D-29352 Adelheidsdorf (DE)
(72) Erfinder: KREUZBERG, Dieter, 21614 Buxtehude (DE); HANISCH, Claus-Dieter, 21073 Hamburg (DE); MARR, Werner, 21224 Rosengarten (DE); SZENTER, Uwe, 21244 Rosengarten (DE)
(74) Vertreter: Moldenhauer, Herbert
(86) Internationale Anmeldenummer: PCT/EP2004/000945
(87) Internationale Veröffentlichungsnummer: WO 2004/069513

(56) Entgegenhaltungen:
- EP-A- 0 242 152
- EP-A- 0 512 609
- DE-A- 2 746 686
- DE-A- 4 433 455
- FR-A- 2 248 127
- US-A- 5 460 497
- US-A1- 2002 018 876

## Beschreibung

### Technisches Gebiet

Die Erfindung betrifft ein Verfahren zur thermischen Formgebung gemäß dem Oberbegriff des Anspruchs 1.

### Technisches Gebiet

Bei der Herstellung von Verkleidungsteilen wird aus Stabilitätsgründen der den Ringüberzug bildende Teil mit einer Hinterschäumung versehen, dabei werden üblicherweise zwei separate Werkzeuge eingesetzt und zwar ein Formwerkzeug für den Überzug und ein Hinterschäumwerkzeug für die Hinterschäumung. Dieses Verfahren ist aufwendig, da der Überzug zunächst in einem Formwerkzeug vorgeformt wird, so dann dem Formwerkzeug entnommen und in das Hinterschäumwerkzeug eingelegt wird. Man hat deshalb Werkzeuge entwickelt, mit denen nacheinander sowohl die Formgebung als auch die Hinterschäumung durchgeführt werden kann.

### Stand der Technik

Das eingangs erwähnte Verfahren ist aus der EP-A-0 512 609 bekannt.

Durch die DE 44 33 455 C2 ist eine Vorrichtung bekannt geworden, bei der das Formwerkzeug sowie das Hinterschäumwerkzeug eine gemeinsame Formhälfte besitzen, mit welcher alternativ eine Formwerkzeug-Formhälfte oder eine Hinterschäumwerkzeug-Formhälfte durch Verschwenken um zwei orthogonal zueinander anliegende Schwenkachsen zusammen bringbar sind. Die Vorrichtung ist jedoch auf hinterschäumte Lederteile mit gesteigerter Qualität ausgerichtet. Das angewendete Verfahren ist relativ aufwendig. Zunächst wird das Lederteil in eine Nebenformhälfte eingelegt und durch Vakuum darin festgehalten. Anschließend wird die Hauptformhälfte auf die Nebenformhälfte geschwenkt und das Lederteil vorgeformt, sodann wird eine Vakuumhaltevorrichtung in der Hauptformhälfte aktiviert und die Hauptformhälfte mit dem Lederteil in ihre ursprüngliche Lage in die Hauptvorrichtung zurückgeschwenkt. Dabei wird das vorgeformte Lederteil mitgenommen. Sodann wird die zweite Nebenformhälfte auf die Hauptformhälfte geschwenkt und der Hinterschäumgang durchgeführt.

Aus der US-A-2002/0018876 A1 ist ein Verfahren zur Herstellung eines zusammengesetzten Schaumformartikels bekannt, bei dem ein Oberflächenhautmaterial bei dem ein thermoplastisches Oberflächenbezugsmaterial durch Thermoformung an die Gestalt der Forminnenwandung angepasst und anschließend mit einem aufgetriebenen, thermisch erweichten Kunststoffgranulat verklebt wird. Das Oberflächenhautmaterial besteht bevorzugt aus nicht vernetztem Polypropylen, es kann jedoch auch ein durch Peroxide, Bestrahlung oder ähnliches vernetztes Harz verwendet werden.

Aus der EP-A 0242152 ist eine Vorrichtung zum Herstellen von Sitzpolstern bekannt, umfassend ein Hauptformteil und zwei Nebenformteile, die nach Bedarf mit dem Hauptformteil in Eingriff gebracht werden können.

### Darstellung der Erfindung

Der Erfindung liegt die Aufgabe zu Grunde ein Verfahren zu schaffen, mit dem die Herstellung von Verkleidungsteilen mit einem Kunststoffüberzug und einer Hinterschäumung in einfacher Weise und in hoher Qualität möglich ist.

Die Lösung der gestellten Aufgabe erfolgt mit den kennzeichnenden Merkmalen von Anspruch 1. Die Unteransprüche 2 bis 4 stellen vorteilhafte Weiterbildungen des Erfindungsgedankens dar.

Bei dem erfindungsgemäßen Verfahren ist es vorgesehen, dass der Kunststoffüberzug mit gleichzeitig einhergehender, thermischer Vernetzung verformt wird.

Bei dem neuen Verfahren wird der Kunststoffüberzug des Verkleidungsteils in eine Werkzeugform eingeführt, die aus einem Hauptformteil und einem ersten Nebenformteil besteht. Durch Erwärmung des Kunststoffüberzugs über die beiden Formteile und Aufbau eines Vakuums an dem Hauptformteil, wird der Kunststoffüberzug am Hauptformteil fixiert und verformt. Sodann wird das erste Nebenformteil durch das zweite Nebenformteil ausgewechselt und die Hinterschäumung durchgeführt. Bei diesem Verfahren bleibt das Hauptformteil ortsfest, lediglich die Nebenformteile werden im vorgegebenem Takt wechselweise mit dem Hauptformteil verbunden um die Verformung und Hinterschäumung durchzuführen.

Die Verformung selbst erfolgt mit gleichzeitig einhergehender chemischer Vernetzung des Kunststoffüberzugs. Als Kunststoffüberzug wird ein Material aus schwefel- oder peroxidisch vernetzbaren vemetzbaren Elastomeren verwendet. Der Kunststoffüberzug kann dabei ein- oder mehrschichtig aufgebaut sein.

In vielen Fällen hat es sich als günstig erwiesen, wenn nach dem Fixieren und Verformen des Kunststoffüberzugs ein Druckmedium, vorzugsweise temperierte Luft oder gesättigter Dampf in den oberhalb des Kunststoffüberzugs im Werkzeug gebildeten Hohlraum zwischen dem ersten Nebenformteil und dem Kunststoffüberzug eingefüllt wird. Hierdurch wird die genauere Formgebung noch unterstützt. Der Kunststoffüberzug wird dabei in jede noch so verwinkelt daliegende Ecke gedrückt.

Nach Abschluss der Hinterschäumung kann eine Entfernung von überschüssigem Material an den Rändern des im Werkzeug gehaltenen Verkleidungsteils durchgeführt werden, so dass dem Werkzeug ein vollständig fertiges Verkleidungsteil entnommen werden kann.

### Kurzbeschreibung der Zeichnung

Anhand zweier in der Zeichnung dargestellte Ausführungsbeispiele wird die Erfindung nachstehend näher erläutert:

Es zeigen:
Figur 1 einen Teil des Werkzeugs mit eingelegtem Kunststoffüberzug im Schnitt, mit einem Hauptformteil und einem ersten Nebenformteil,
Figur 2 das Werkzeugteil nach Figur 1 mit dem Hauptformteil und einem zweiten Nebenformteil und einer eingebrachten Hinterschäumung,
Figur 3 einen Schnitt durch das Werkzeug mit der Möglichkeit der Einbringung von Druckluft und
Figur 4 das Werkzeug nach Figur 3 mit ausgewechseltem Nebenformteil und eingebrachter Hinterschäumung.

### Ausführung der Erfindung

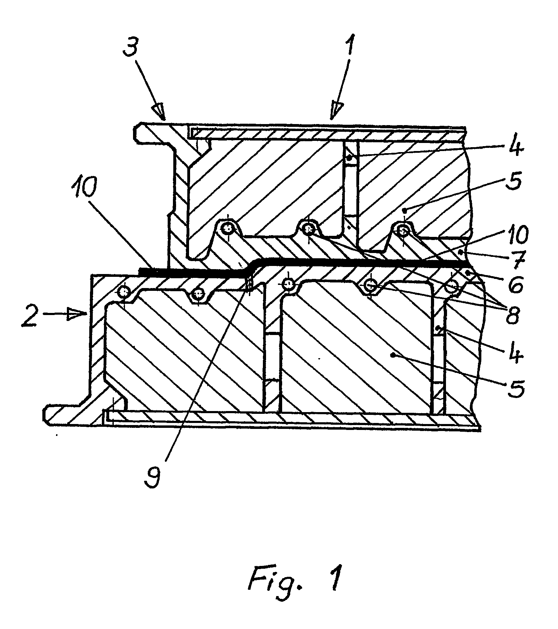

Das in der Figur 1 im Schnitt und nur auszugsweise dargestellte Werkzeug 1 besteht aus dem Hauptformteil 2 und dem ersten Nebenformteil 3. Die Teile 2 und 3 der Werkzeugform 1 sind kastenförmig ausgebildet mit innenliegenden Zwischenrippen 4 und dazwischen eingebrachter Isolierung 5. Die Werkzeugform ist aus Aluminium hergestellt. In die zueinander gewandten Wände 6 und 7 der Werkzeugform sind die Kanäle 8 zur Führung eines Heizmediums beispielsweise eines Heizöls untergebracht. Außerdem sind in der Wand 6 des Hauptformteils 2 zusätzliche Kanäle 9 enthalten, über die ein Vakuum angelegt werden kann. Zwischen das Hauptformteil 2 und dem Nebenformteil 3 ist der Kunststoffüberzug 10 des herzustellenden Verkleidungsteils eingelegt. Das Hauptformteil 2 und das Nebenformteil 3 sind mit ihren aneinander anliegenden Wandteilen 6 und 7 so ausgebildet, dass der Kunststoffüberzug 10, beim Zusammenführen der beiden Formteile 2 und 3 in einer Art Tiefziehverfahren vorgeformt wird. Das Tiefziehen des Kunststoffüberzugs 10, wird durch Anlegen eines Vakuums und auch durch die Zuführung von Wärme über die Kanäle 8 unterstützt. Um eine völlige Gleichmäßigkeit beim Tiefziehen des Kunststoffüberzugs 10 zu erreichen, wird das Nebenformteil 3 pressenartig von oben auf das Hauptformteil 2 gedrückt.

Nach dem die Verformung abgeschlossen ist, beispielsweise durch eine chemische Vernetzung des Kunststoffüberzugs wird das erste Nebenformteil 3 durch ein zweites Nebenformteil 11 ersetzt. Zwischen dem Nebenformteil 11 und dem Hauptformteil 2 mit dem darin anliegenden Kunststoffüberzug 10 besteht durch eine entsprechende Ausgestaltung der Wandung 12 des zweiten Nebenformteils 11 ein Hohlraum, in den die Hinterschäumung 13 eingebracht werden kann. Die Wandungen 12 und 6 sind mit den Kanälen 8 für ein entsprechendes Heizöl ausgestattet. Das zweite Nebenformteil 11 ist jedoch ohne Isolierung ausgeführt, weil für die Hinterschäumung nicht so hohe Temperaturen wie für die Formgebung nach Figur 1 mit dem ersten Nebenteil 3 notwendig sind.

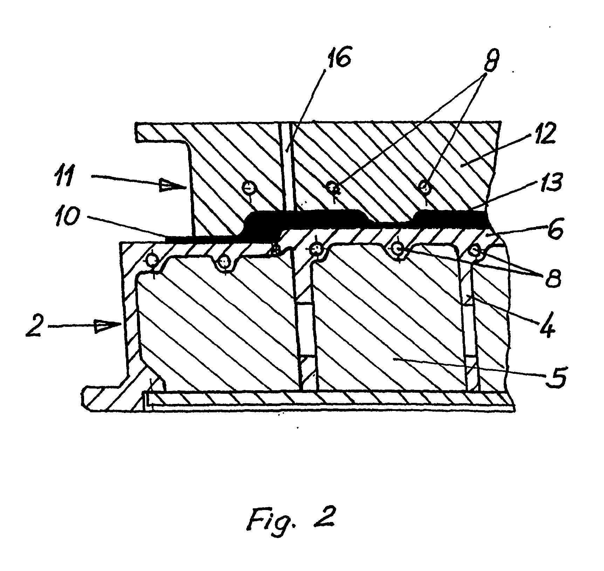

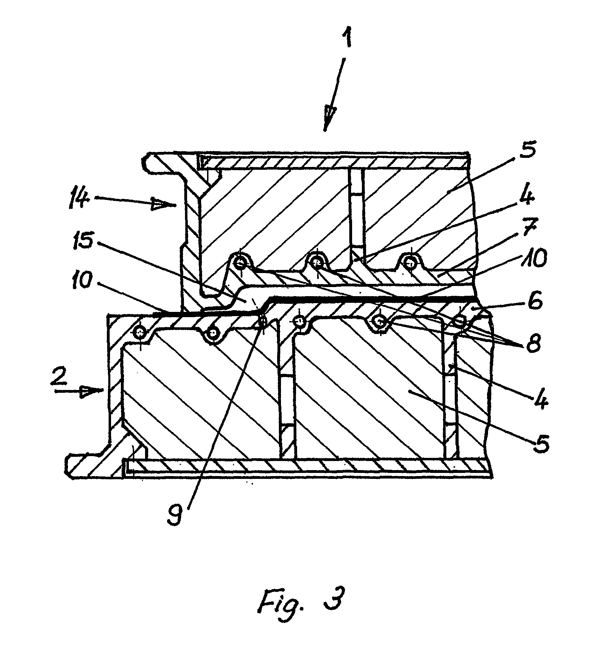

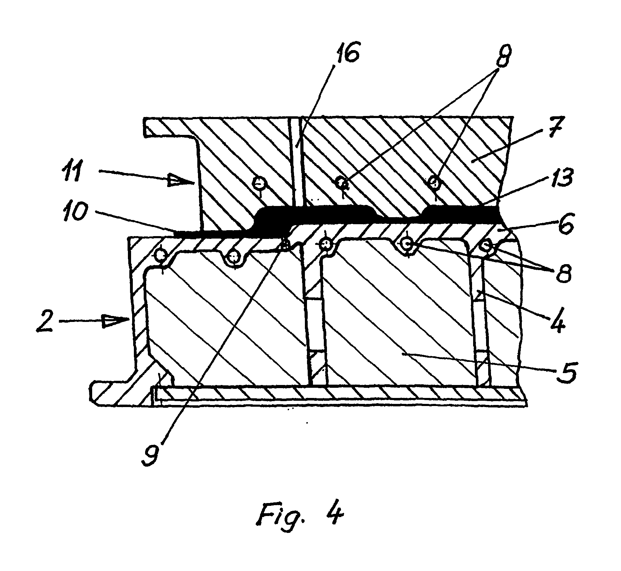

In den Figuren 3 und 4 ist eine Werkzeugform 1 gezeigt, bei der die Formgebung des Kunststoffüberzugs 10 durch eine Erwärmung desselben, das Anlegen eines Vakuums und Einführung eines Druckgases, beispielsweise Stickstoff, in den oberhalb des Kunststoffüberzugs 10 und des ersten Nebenformteils 14 gebildeten Raum 15 erfolgt. Die Figur 3 zeigt die Lage des Kunststoffüberzugs 10 nach Anbringung des Vakuums über die Kanäle 9 und Einführung eines Druckgases in den Raum 15. Der Kunststoffüberzug 10 liegt dicht an der Wandung 6 des Hauptformteils 2 an. Nach Abschluss der Formgebung wird das erste Nebenformteil 14 durch das zweite Nebenformteil 11 ersetzt (siehe hierzu Figur 4) und die Hinterschäumung durchgeführt. Für die Einbringung des Hinterschäumungsmittels sind die Kanäle 16 vorgesehen. Abgesehen von der Art der Formgebung für den Kunststoffüberzug 10 und der damit verbundenen Ausgestaltung des ersten und des zweiten Nebenformteils sind die Werkzeugformen 1 nach den Figuren 1 und 2, sowie 3 und 4 identisch. Das Nebenformteil 14 ist universell für große Gruppen von Verkleidungsteilen einsetzbar und kann optimal als Nebenformteil 11 zum Hinterschäumen eingesetzt werden.

## Patentansprüche

1. Verfahren zur thermischen Formgebung von aus einem Kunststoffüberzug mit einer Hinterschäumung bestehenden Verkleidungsteilen, wobei der Kunststoffüberzug (10) des Verkleidungsteils in einer Werkzeugform (1) aus einem Hauptformteil (2) und einem ersten Nebenformteil (3,4) durch Erwärmung, Tiefziehen und Anlegen eines Vakuums oder durch Erwärmung über die Formteile (2,3) und Aufbau eines Vakuums an dem Hauptformteil (2) geformt und fixiert wird und wobei nach Auswechseln des ersten Nebenformteils (3,14) durch das zweite Nebenformteil (11) die Hinterschäumung (13) durchgeführt wird, **dadurch gekennzeichnet, dass** der Kunststoffüberzug (10) mit gleichzeitig einhergehender, thermischer Vernetzung verformt wird.

2. Verfahren nach Anspruch 1, **dadurch gekennzeichnet, dass** nach dem Fixieren und Verformen des Kunststoffüberzugs (10) ein temperiertes Druckmedium oder gesättigter Dampf in den oberhalb des Kunststoffüberzugs (10) von dem Nebenformteil (14) gebildeten Hohlraum (15) eingefüllt wird.

3. Verfahren nach einem der Ansprüche 1 bis 2, **dadurch gekennzeichnet, dass** nach Abschluss der Hinterschäumung (13) eine Entfernung von überschüssigem Material an den Rändern, sowie der an jeder beliebigen Stelle im Verkleidungsteil erzeugbaren Durchbrüche des in der Werkzeugform (1) gehaltenen Verkleidungsteils erfolgt.

4. Verfahren nach einem der Ansprüche 1 bis 3, **dadurch gekennzeichnet, dass** die bei der Hinterschäumung entstehende Schaumeigenhaut des Verkleidungsteils durch das Einbringen eines tiefziehfähigen, thermoplastischen Folienmaterials in das zweite Nebenformteil zusätzlich abgedeckt wird.

## Claims

1. A method for thermally shaping covering elements comprising a plastic coating with a foam backing, the plastic coating (10) of the covering element being moulded and fixed in a mould (1) comprising a main mould part (2) and a first secondary mould part (3, 4) by heating, thermoforming and applying a vacuum or by heating via the mould parts (2, 3) and building up a vacuum at the main mould part (2), and the foam backing (13) being carried out after exchanging the first secondary mould part (3, 14) for the second secondary mould part (11), **characterized in that** the plastic coating (10) is shaped with simultaneously accompanying thermal crosslinking.

2. A method according to claim 1, **characterized in that**, after the fixing and moulding of the plastic coating (10), a temperature-controlled pressure medium or saturated steam is introduced into the cavity (15) formed above the plastic coating (10) by the secondary mould part (14).

3. A method according to either one of claims 1 and 2, **characterized in that**, after completion of the foam backing (13), excess material is removed from the edges, and from the apertures of the covering element held in the mould (1), which can be produced in the covering element at any desired location.

4. A method according to any one of claims 1 to 3, **characterized in that** the independent foam skin of the covering element that is produced during the foam backing is additionally covered by introducing into the second secondary mould part a thermoplastic film material that is suitable for thermoforming.

## Revendications

1. Procédé de formage thermique de pièces de revêtement constituées d'un revêtement en matière synthétique doté d'une mousse, le revêtement (10) en matière synthétique de la pièce de revêtement étant formé et fixé dans un moule à outil (1) constitué d'une partie principale de moule (2) et d'une première partie secondaire de moule (3, 4) par chauffage, emboutissage profond et application d'un vide ou par chauffage par les parties de moule (2, 3) et établissement d'un vide sur la partie principale de moule (2), et dans lequel après remplacement de la première partie secondaire de moule (3, 14) par la deuxième partie secondaire de moule (11), on réalise le moussage (13), **caractérisé en ce que** le revêtement en matière synthétique (10) est déformé en même temps qu'il est réticulé thermiquement.

2. Procédé selon la revendication 1, **caractérisé en ce qu'**après la fixation et le formage du revêtement (10) en matière synthétique, on remplit l'espace creux (15) formé par la partie secondaire de moule (14) au-dessus du revêtement en matière synthétique (10) d'un fluide sous pression à température contrôlée ou de vapeur saturée.

3. Procédé selon l'une des revendications 1 à 2, **caractérisé en ce que**, lorsque le moussage (13) est terminé, on enlève le matériau en excès sur les bords et on réalise des perforations dans la pièce de revêtement maintenue dans le moule à outil (1), ces perforations étant créées en des emplacements quelconques de la pièce de revêtement.

4. Procédé selon l'une des revendications 1 à 3, **caractérisé en ce que** la peau propre de la mousse de la pièce de revêtement obtenue lors du moussage est encore recouverte par le placement dans la deuxième partie secondaire de moule d' un matériau en feuille thermoplastique apte à subir un emboutissage profond.
